# EUROPÄISCHE PATENTANMELDUNG

(11) **EP 2 208 410 A1**
(43) Veröffentlichungstag der Anmeldung: **21.07.2010**
(21) Anmeldenummer: 10401004.6
(22) Anmeldetag: 13.01.2010
(51) Int. Cl.: A01C 7/08

(54) **Verteilerkopf**

(30) Priorität: 19.01.2009 DE 102009005072
(71) Anmelder: Amazonen-Werke H. Dreyer GmbH & Co. KG, 49205 Hasbergen (DE)
(72) Erfinder: Wilken, Martin, 26409 Wittmund (DE)

(57) **Zusammenfassung**

Verteilerkopf (1) für eine landwirtschaftliche pneumatische Verteilmaschine für körniges Material mit einem halbkugelförmigen Deckelelement (3) und einem bodenartigen Unterteil (5) zur Anbringung auf einem pneumatisch beaufschlagten Steigrohr (2), dem durch eine Fördereinrichtung körniges Material aus einem Behälter zugeführt wird, um es über die von dem Deckelelement (3) gebildeten Prallfläche (7) auf die von dem Unterteil (5) abgehenden Abgangsleitungen (9), die zu Ausbringelementen führen, in gleichmäßiger Weise aufzuteilen, wobei von dem Deckelelement (3) und dem Unterteil (5) ein Verteilerraum für das körnige Material gebildet wird. Um, eine verbesserte und gleichmäßigere Übergabe des körnigen Materiales aus dem Verteilerraum in die von dem Verteilerraum abgegebenen Abgangsleitungen (9) auch bei einem geringen Luftstrom zu gewährleisten, ist vorgesehen, dass der jeweilige Eingangsbereich (10) der Abgangsleitungen (9) im Übergangsbereich von dem Verteilerraum zu den Abgangsleitungen im Bereich des als Bodenelement (4) ausgebildeten Unterteiles trichterförmig ausgebildet ist.

## Beschreibung

Die Erfindung betrifft einen Verteilerkopf gemäß des Oberbegriffes des Patentanspruches 1.

Ein derartiger Verteilerkopf ist beispielsweise durch die DE 195 22 060 A1 bekannt.

Dieser Verteiler weist ein als ebene Bodenplatte ausgebildetes Unterteil auf, in welches Durchtrittsöffnungen, an welchem sich die Abgangsleitungen anschließen, angeordnet sind. Zwischen den einzelnen Durchtrittsöffnungen befinden sich im Bereich der Bodenplatte ebene Bereiche, die die Verteilung und Aufteilung des Materiales auf die einzelnen Abgangsleitungen stören können.

Der Erfindung liegt die Aufgabe zugrunde, eine verbesserte und gleichmäßigere Übergabe des körnigen Materiales aus dem Verteilerraum in die von dem Verteilerraum abgegebenen Abgangsleitungen auch bei einem geringen Luftstrom zu gewährleisten.

Diese Aufgabe wird erfindungsgemäß dadurch gelöst, dass der jeweilige Eingangsbereich der Abgangsleitungen im Übergangsbereich von dem Verteilerraum zu dem Abgangsleitungen im Bereich des als Bodenelement ausgebildeten Unterteiles trichterförmig ausgebildet ist.

Infolge dieser Maßnahmen wird ein weiches Einleiten des körnigen Materiales aus dem Verteilerraum in die Abgangsleitung durch die trichterförmigen Eingangsbereiche der Abgangsleitungen gewährleistet.

Um möglichst keine ebenen Bereiche zwischen den Eingangsbereichen der Abgangsleitungen aus dem Verteilerraum
P09-001-Dri-2130.rtf / 38400 Byte / 14.12.09 10:30:19 zu erhalten, ist vorgesehen, dass zwischen den einzelnen trichterförmigen Eingangsbereichen schmale und/oder kegelförmig ausgestaltete Stegelemente angeordnet sind.

Vorteilhaft ist insbesondere, wenn der Bodenbereich des Unterteiles vollständig von den trichterförmigen Eingangsbereichen gebildet wird.

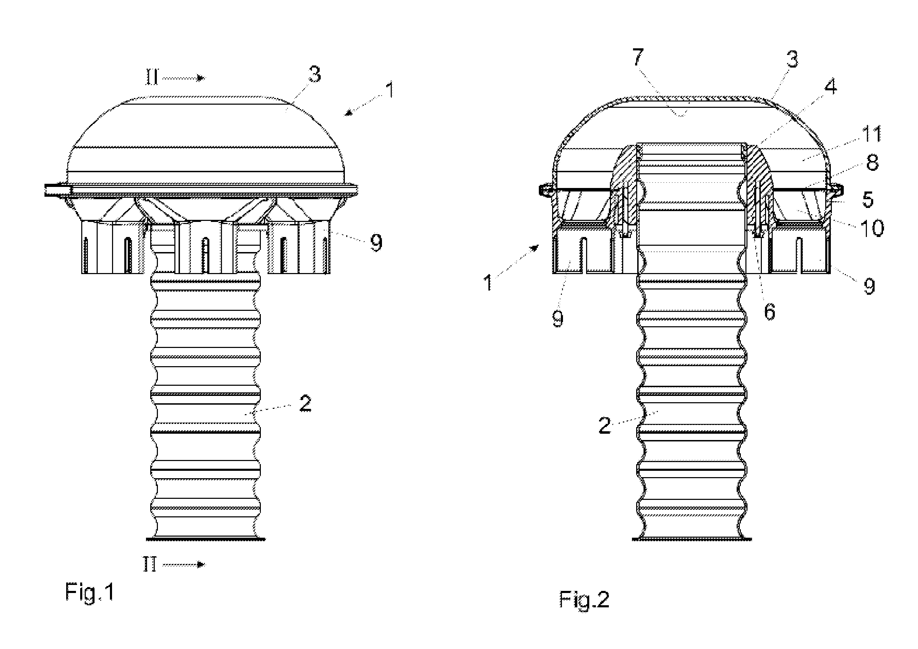

Weitere Einzelheiten der Erfindung sind der Beispielsbeschreibung und den Zeichnungen zu entnehmen. Hierbei zeigen
- Fig. 1: den auf einem Steigrohr angeordneten Verteiler in Seitenansicht,
- Fig. 2: den auf einem Steigrohr angeordneten Verteilerkopf im Schnitt II - II,
- Fig. 3: das auf dem Steigrohr angeordnete Unterteil des Verteilerkopfes in perspektivischer Darstellung und
- Fig. 4: das Unterteil des Verteilerkopfes im Schnitt IV - IV.

Der Verteilerkopf 1 ist für eine pneumatische Sämaschine vorgesehen und auf einem pneumatisch beaufschlagten wellenförmigen Steigrohr 2 angeordnet. Der Verteilerkopf ist mit einem äußeren Deckelelement 3, einem inneren Verteilerdeckel 4 und einem Unterteil 5 ausgestattet. Das Unterteil 5 weist ein Verbindungselement 6 zur Anbringung auf dem Steigrohr 2 auf. Das Steigrohr 2 ist an eine pneumatisch beaufschlagte Förderleitung angeschlossen, in welche das auszubringende Material in dosierter Weise eingespeist wird.
P09-001-Dri-2130.rtf / 38400 Byte / 14.12.09 10:30:19 Das Deckelelement 3 bildet im oberen Bereich die Prallfläche 7, auf welche das aus dem Steigrohr 2 zugeführte Material zur Verteilung aufgeblasen wird. Das Unterteil 4 des Verteilerkopfes 1 weist Durchtrittsöffnungen 8 auf, an welche sich Anschlussstutzen 9 anschließen, an welche die zu Ausbringorganen führenden Verteilerleitungen anzuschließen sind.

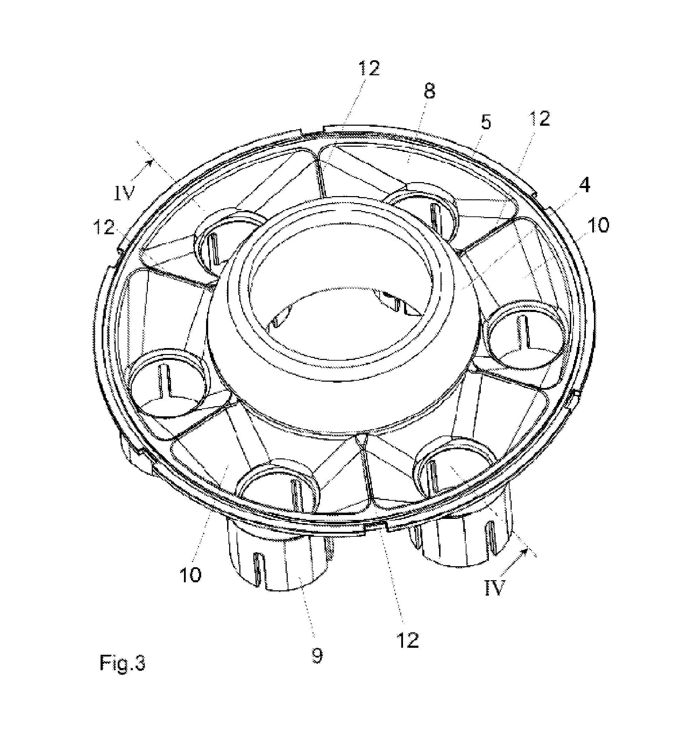

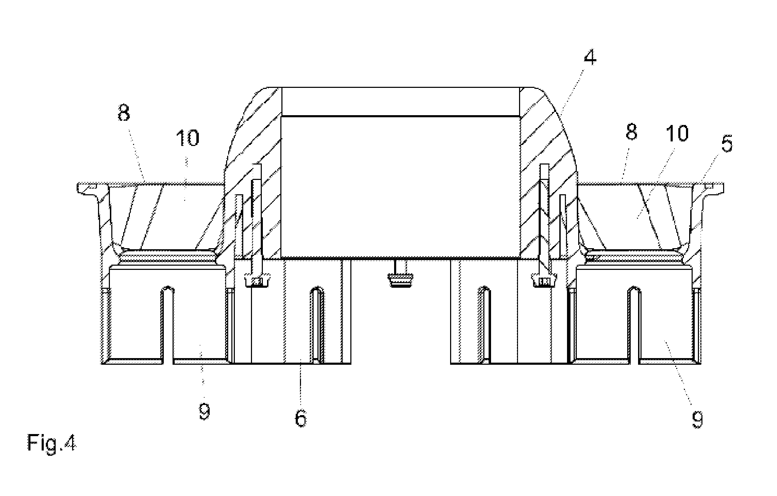

Der jeweilige Eingangsbereich 10 der Abgangsleitungen 9 ist im Übergangsbereich von dem Verteilerraum 15 zu den Abgangsleitungen 9 im Bereich des als Bodenelement ausgebildeten Unterteiles 4 trichterförmig ausgebildet, wie insbesondere die Fig. 3 und 4 zeigen. Der Bodenbereich des Unterteiles 4 wird vollständig von den trichterförmigen Eingangsbereichen 10 gebildet, wie Fig. 3 zeigt. Zwischen den einzelnen trichterförmigen Eingangsbereichen 10 sind schmale und kegelförmig ausgestaltete Stegelemente 12 angeordnet.

Durch den Aufprall der Materialpartikel auf die von der Deckelfläche gebildeten Prallfläche 7 werden die Materialpartikel in gleichmäßiger Weise auf die einzelnen Abgangsleitungen 9 aufgeteilt.

## Patentansprüche

1. Verteilerkopf für eine landwirtschaftliche pneumatische Verteilmaschine für körniges Material mit einem halbkugelförmigen Deckelelement und einem bodenartigen Unterteil zur Anbringung auf einem pneumatisch beaufschlagten Steigrohr, dem durch eine Fördereinrichtung körniges Material aus einem Behälter zugeführt wird, um es über die von dem Deckelelement gebildeten Prallfläche auf die von dem Unterteil abgehenden Abgangsleitungen, die zu Ausbringelementen führen, in gleichmäßiger Weise aufzuteilen, wobei von dem Deckelelement und dem Unterteil ein Verteilerraum für das körnige Material gebildet wird, **dadurch gekennzeichnet, dass** der jeweilige Eingangsbereich (10) der Abgangsleitungen (9) im Übergangsbereich von dem Verteilerraum zu den Abgangsleitungen (9) im Bereich des als Bodenelement (4) ausgebildeten Unterteiles trichterförmig ausgebildet ist.

2. Verteilerkopf nach Anspruch 1, **dadurch gekennzeichnet, dass** zwischen den einzelnen trichterförmigen Eingangsbereichen (10) schmale und/oder kegelförmig ausgestaltete Stegelemente (12) angeordnet sind.

3. Verteilerkopf nach Anspruch 1, **dadurch gekennzeichnet, dass** der Bodenbereich des Unterteiles (4) vollständig von den trichterförmigen Eingangsbereichen (10) gebildet wird.
